# FASCICULE DE BREVET EUROPEEN

(11) **EP 3 674 144 B1**
(45) Date de publication et mention de la délivrance du brevet: **09.02.2022**
(21) Numéro de dépôt: 19219556.8
(22) Date de dépôt: 23.12.2019
(51) Int. Cl.: B60R 13/02, B60J 5/10

(54) **HAYON ARRIÈRE À DOUBLURE STRUCTURELLE MUNIE D'UNE TRAPPE**
HECKKLAPPE MIT DOPPELWANDIGER KONSTRUKTION MIT EINER SCHLIESSKLAPPE
REAR DOOR WITH DOUBLE WALL CONSTRUCTION HAVING A CLOSING FLAP

(30) Priorité: 27.12.2018 FR 1874247
(43) Date de publication de la demande: 01.07.2020
(73) Titulaire: Compagnie Plastic Omnium, 69007 Lyon (FR)
(72) Inventeur: LETERRIER, Franck, 01150 SAINTE-JULIE (FR); BARBIER, Pascal, 01150 SAINTE-JULIE (FR); COUDRON, Philippe, 01150 SAINTE-JULIE (FR)
(74) Mandataire: LLR

(56) Documents cités:
- WO-A1-2010/125299
- DE-A1- 3 609 413
- DE-A1-102010 053 355
- JP-A- 2002 225 565
- JP-A- 2007 210 553
- JP-A- 2016 084 106
- KR-B1- 101 922 167
- US-B1- 6 179 359

## Description

L'invention concerne les hayons en plastique de véhicule automobile.

Habituellement, les hayons de véhicule automobile comportent une pièce structurelle, généralement appelée doublure, qui est située entre une peau externe destinée à constituer la face externe visible de la pièce de carrosserie, et une garniture, qui est une pièce d'habillage intérieur qui couvre en général totalement les parties inesthétiques de la doublure structurelle qui seraient autrement visibles depuis l'intérieur du véhicule. Souvent, cette garniture rapportée couvre particulièrement une partie basse de la doublure structurelle, située en dessous de la lunette arrière du hayon. Cette garniture participe donc à la qualité perçue par l'utilisateur, elle doit donc être d'aspect soignée.

Généralement, le hayon intègre sur la face de la doublure côté habitacle et en dessous de la lunette arrière un ensemble d'équipements techniques tels qu'un moteur d'assistance à la fermeture du hayon, des faisceaux électriques, un moteur de serrure, des calculateurs. Ces éléments techniques sont généralement fixés sur la face de la doublure structurelle du hayon qui est en regard de l'habitacle du véhicule. Ainsi, ils sont situés et fixés sur la doublure et la garniture recouvrant la doublure, et donc cachés à l'intérieur du hayon. Si l'un de ces éléments techniques est défaillant, on y accède en désassemblant la garniture de la doublure structurelle, on le remplace, puis on réassemble la garniture sur la doublure structurelle. Ce mode opératoire représente un moyen simple de remplacer un élément technique défaillant.

Ce type de hayon, bien que très satisfaisant, a l'inconvénient de comporter plusieurs pièces distinctes, notamment la garniture, la doublure structurelle et la peau externe. Ainsi lors de l'assemblage du hayon, plusieurs étapes d'assemblage sont nécessaires, ce qui augmentent le coût de fabrication de celui-ci. On peut aussi noter que le maniement d'une garniture de grande taille est compliqué pour les opérateurs sur la ligne de production, ce qui augmente les risques de chocs pouvant détériorer le hayon lors de son assemblage. De même, ces étapes d'assemblage nécessitent la présence d'un équipement adapté sur la ligne de production. De plus, la facilité d'accès à un élément technique défaillant qui doit être remplacé, est une fonctionnalité rarement utile puisque ces éléments sont dimensionnés pour ne pas tomber en panne pendant la durée de vie et utilisation normale du véhicule (par exemple, le moteur de serrure, le faisceau électrique alimentant l'éclaireur de plaque d'immatriculation, ...).

De plus, l'ajout de pièces augmente le poids du hayon, ce qui réduit les performances du véhicule et augmente sa consommation.

On connait des hayons dans lesquels la fonction de la garniture est réalisée en partie ou entièrement par la doublure structurelle. Dans ceux-ci, les éléments techniques sont fixés sur la face extérieure de la doublure structurelle en regard de la peau d'aspect du hayon. Par face extérieure on entend la face de la doublure structurelle qui est tournée vers l'extérieur du véhicule lorsque le hayon est en monté sur un véhicule, en position fermée. Ainsi, une partie ou la totalité de la face intérieure, opposée à la face extérieure et visible depuis l'habitacle ou quand le hayon est ouvert, fait office de garniture, qui est donc absente en partie ou en totalité du hayon. Ces hayons surmontent les inconvénients précités. Toutefois, dans ceux-ci, l'accès aux éléments techniques n'est alors plus possible une fois le hayon assemblé, car ceux-ci sont enfermés entre la doublure structurelle et la peau, le plus souvent assemblés par un collage très difficilement démontable puis remontable. Ainsi, lorsqu'un élément technique est défaillant, le remplacement de celui-ci nécessite soit de démonter la peau en la décollant de la doublure du hayon, soit de remplacer totalement le hayon, ce qui est extrêmement couteux ou difficile dans les deux cas.

Le document KR 101 922 167 B1 décrit une doublure structurelle en matière plastique pour hayon de véhicule automobile.

On souhaite donc proposer une doublure de hayon à garniture partiellement ou totalement intégrée permettant le remplacement d'un ou plusieurs éléments techniques du hayon sans avoir à le démonter ou le remplacer.

A cet effet, l'invention selon la revendication 1 a pour objet une doublure structurelle en matière plastique pour hayon de véhicule automobile qui comporte une face extérieure tournée vers l'extérieur du véhicule et une face intérieure tournée vers l'intérieur du véhicule lorsque le hayon est assemblé sur celui-ci, et au moins une rainure portée par une des deux faces, la rainure formant une zone de faiblesse mécanique apte à faciliter la réalisation d'une ouverture au sein de la doublure structurelle, la rainure formant un contour délimitant une trappe d'accès .

Ainsi, lorsque l'on souhaite remplacer un élément technique défectueux, on découpe une partie pré-identifiée de la doublure structurelle du hayon afin d'avoir accès à l'élément technique en question. Ainsi, on a accès facile à l'élément technique sans avoir à désassembler la doublure structurelle et la peau du hayon. On peut donc changer l'élément technique de manière plus rapide et moins coûteuse qu'avec les hayons connus, ayant une doublure structurelle à garniture intégrée.

La rainure forme une zone de faiblesse mécanique qui permet et facilite la découpe de la doublure structurelle. De plus, la rainure permet un guidage de la découpe suivant un contour défini et précis, ce qui permet d'éviter d'endommager des éléments techniques ou des câblages qui seraient situés juste derrière sur la face extérieure de la doublure structurelle. La précision de la découpe permet également de faciliter le remplacement de la partie découpée ou son replacement de manière facile et esthétiquement compatible avec le fait que la doublure structurelle est visible depuis l'habitacle du véhicule.

Enfin, le fait que la rainure soit située sur la face de la doublure structurelle qui est en regard de la peau externe du hayon rend la rainure invisible sur la face opposée à la première citée. Cette disposition rend la rainure discrète, voire invisible pour un utilisateur du véhicule.

La doublure structurelle selon l'invention peut aussi comprendre l'une ou plusieurs des caractéristiques suivantes, prises seules ou en combinaison :
- la face extérieure comporte des moyens de fixation d'éléments techniques situés à l'intérieur du contour fermé délimitant la trappe d'accès ;
- la face extérieure comporte au moins un moyen de retenue disposé à proximité de la rainure hors du contour fermé ;
- la trappe d'accès comporte au moins un moyen de fixation ;
- le moyen de fixation de la trappe d'accès est situé en regard du ou des moyens de retenue disposés à proximité de la rainure hors du contour fermé ;
- une partie de la rainure constitue un film charnière permettant la rotation de la trappe lorsque l'ouverture de la doublure structurelle a été réalisée ;
- le moyen de fixation de la trappe d'accès est apte à recevoir une agrafe apte à coopérer avec le moyen de retenue disposé à proximité de la rainure hors du contour fermé ;
- le moyen de fixation de la trappe d'accès est en regard des moyens de retenue disposés à proximité de la rainure hors du contour fermé lorsque la trappe d'accès effectue une rotation autour d'un axe normal à la face extérieure.

Avantageusement, la doublure structurelle comprend une trappe de remplacement de l'ouverture de la doublure structurelle comportant au moins un clip apte à coopérer avec le moyen de retenue disposé à proximité de l'ouverture de la doublure structurelle.

Avantageusement, la trappe de remplacement peut comporter une face technique destinée à être cachée lorsque la trappe de remplacement est montée sur l'ouverture de la doublure structurelle, la face technique comportant au moins un moyen de fixation d'élément technique.

La trappe de remplacement peut avantageusement avoir une taille supérieure à celle de l'ouverture de la doublure structurelle à laquelle la trappe de remplacement est destinée.

L'invention a également pour objet un hayon plastique de véhicule automobile comportant une doublure structurelle selon l'invention.

L'invention a également pour objet , selon la revendication 14, un procédé de remplacement d'un élément technique fixé sur une doublure structurelle d'un hayon de véhicule automobile qui comporte les étapes de :
- découpe d'une trappe d'accès dans la doublure structurelle du hayon en suivant une rainure de la doublure structurelle ;
- dégagement d'une ouverture dans la doublure structurelle laissée par la découpe de la trappe d'accès ;
- remplacement de l'élément technique par un élément technique de remplacement ; et
- fermeture de l'ouverture.

Avantageusement, l'étape de fermeture de l'ouverture peut être réalisée par clippage d'une trappe de remplacement.

Avantageusement, le procédé selon l'invention peut comporter les caractéristiques suivantes :
- l'étape de découpe de la trappe d'accès laisse intacte une partie de la rainure formant un film charnière de la doublure structurelle ;
- l'étape de dégagement de la trappe d'accès est réalisée par rotation de la trappe autour du film charnière ;
- l'étape de fermeture est réalisée en rabattant la trappe d'accès dans l'ouverture.

Avantageusement, le procédé selon l'invention peut comporter les caractéristiques suivantes :
- l'étape de dégagement de la trappe d'accès est réalisée par retrait complet de celle-ci ;
- l'étape de fermeture est réalisée en replaçant la trappe d'accès dans l'ouverture, en lui ayant fait effectuer une rotation autour d'un axe de celle-ci, de préférence une rotation de 180 degrés autour de l'axe.

### Brève description des figures

Dans ce qui suit, les termes tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures.

L'invention sera mieux comprise à la lecture de la description qui va suivre donnée uniquement à titre d'exemple et faite en se référant aux dessins annexés dans lesquels :
[Fig. 1] est une vue en éclaté en perspective d'une partie de hayon comportant une doublure structurelle selon l'invention ;
[Fig. 2] est une vue en perspective d'une partie de hayon comportant une doublure structurelle selon l'invention ;
[Fig. 3] est une section d'un hayon de véhicule automobile comportant une doublure structurelle selon l'invention selon le plan A-Ade la figure 2 ;
[Fig. 4] est une vue d'une face intérieure d'une doublure structurelle de hayon selon l'invention ;
[Fig. 5] a et b est une section d'une doublure structurelle selon un premier mode de réalisation de l'invention selon le plan B-B de la figure 4 ;
[Fig. 6] a et b est une section d'une doublure structurelle selon un deuxième mode de réalisation de l'invention selon le plan B-B de la figure 4 ;
[Fig. 7] a et b est une section d'une doublure structurelle selon un premier mode de réalisation de l'invention selon le plan B-B de la figure 4 ;
[Fig. 8] est une section partielle d'une doublure structurelle suivant un mode de réalisation de l'invention ;
[Fig. 9] est une section partielle d'une doublure structurelle suivant un mode de réalisation de l'invention.

### Description détaillée

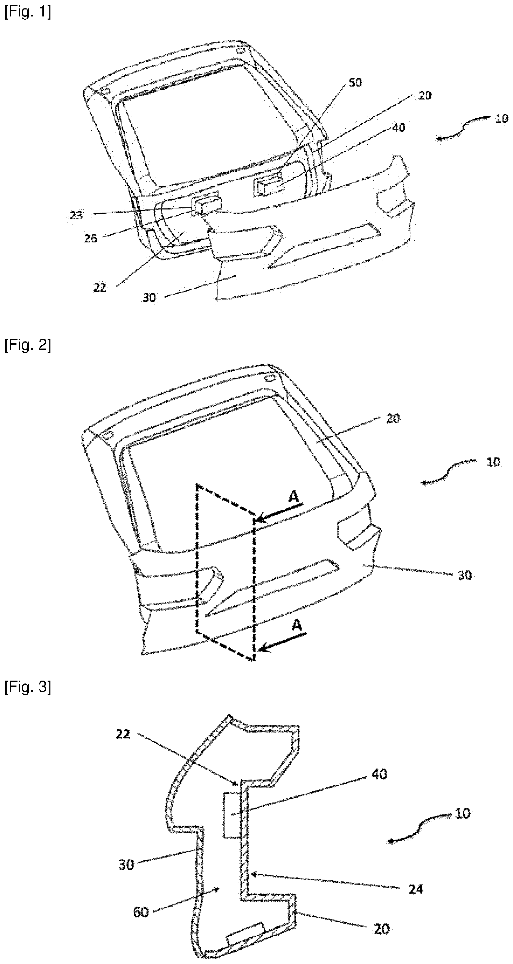

On se réfère maintenant aux figures 1, 2, 3 et 4 qui présentent un hayon 10 de véhicule automobile comportant une doublure structurelle 20 selon l'invention.

Le hayon 10 comporte une doublure structurelle 20. Par doublure structurelle on entend une doublure qui assure la tenue mécanique du hayon, supporte les autres éléments de celui-ci qui sont fixés sur elle et relie par des charnières le hayon à la caisse du véhicule.

La doublure structurelle 20 comporte des zones d'interface aptes à accueillir une peau d'aspect 30 du hayon 10, ainsi qu'une ouverture d'accueil pour une lunette arrière. Elle comporte une face extérieure 22 destinée à être en regard de la peau externe 30. Par face extérieure 22, on entend la face de la doublure structurelle 20 qui est tournée vers l'extérieur du véhicule lorsque le hayon 10 est assemblé sur celui-ci, en position fermée. Cette face extérieure 22 accueille, comme nous le verrons plus loin, des moyens de fixation 26 d'éléments techniques. Elle comporte également une face intérieure 24 qui est opposée à la face extérieure 22. Comme on peut le voir sur la figure 3, qui est une section de la partie basse du hayon 10, la peau d'aspect 30 et la doublure structurelle 20 forment entre elles deux, une fois assemblées, un corps creux 60.

La face extérieure 22 de la doublure structurelle 20 comporte des moyens de fixation 26. Ainsi, ces moyens de fixation 26 sont situés dans le corps creux 60. Ils ne sont donc pas visibles hors de ce corps creux 60. De même, ils ne sont pas accessibles lorsque la peau d'aspect 30 est assemblée sur le hayon. Ces moyens de fixation 26 sont aptes à fixer des éléments techniques de toute sorte sur la face extérieure 22 de la doublure structurelle 20.

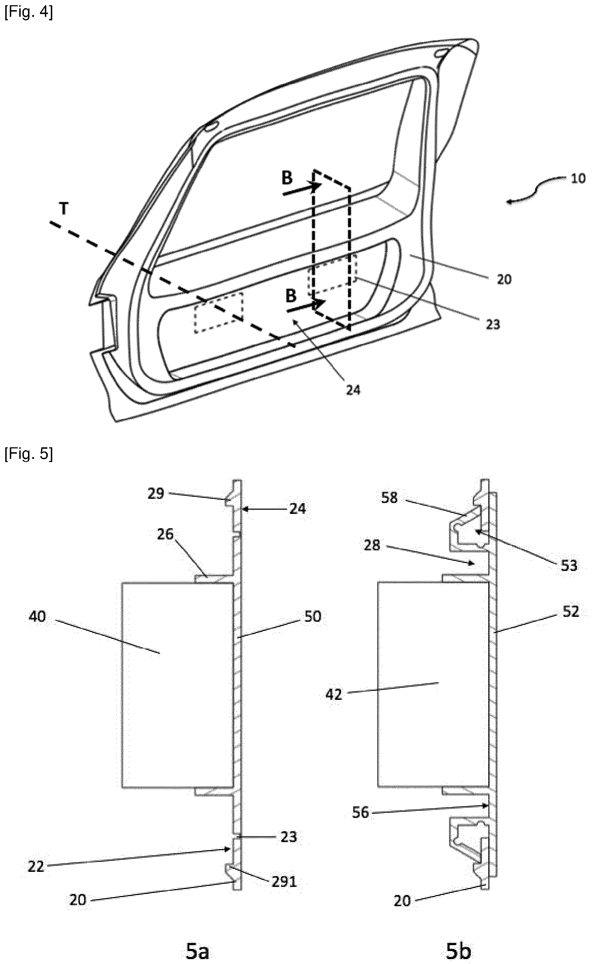

Une des faces extérieure 22 ou intérieure 24 de la doublure structurelle 20 comporte une rainure 23 la parcourant. Cette rainure 23 est représentée en figure 1. Les pointillés de la figure 4 représentent par exemple la localisation de la rainure 23 sur la face intérieure 22 de la doublure structurelle 20 qui est non visible sur celle-ci. La disposition de cette rainure 23 est telle qu'elle diminue localement l'épaisseur de la doublure structurelle 20. La rainure est non débouchante. Ainsi, et de manière avantageuse, elle n'est pas visible sur la face intérieure 24. Ainsi, lorsque la doublure structurelle 20 est assemblée sur le hayon 10, la rainure 23, située dans le corps 60, est invisible.

La rainure 23 délimite une zone de faiblesse mécanique qui est apte à faciliter la réalisation d'une ouverture 28 au sein de la doublure structurelle 20. Cette ouverture 28 peut-être réalisée par découpe, à l'aide d'un outil de coupe, comme une lame effilée, une fraiseuse de petit diamètre, une pointe chauffée. Tout autre moyen de découpe pourra être utilisé. La découpe de la doublure structurelle 20 est grandement facilitée par la zone de faiblesse mécanique créée par la rainure 23. Ainsi, il est possible de découper la doublure structurelle 20 selon un contour suivant la rainure 23 de manière précise, car la rainure 23, bien que sur la première face 22 qui est invisible à la personne effectuant la découpe, guide mécaniquement la découpe. De plus, le guide fourni par la découpe permet d'éviter de réaliser celle-ci directement sur des éléments techniques, des câblages, ou tout autres éléments à éviter qui seraient placés sur la face extérieure 22 de la doublure structurelle 20. La précision de la découpe permet également un remplacement ou un replacement de la partie découpée qui soit esthétiquement compatible avec la visibilité de la face intérieure 24 de la doublure structurelle 20 depuis un habitacle d'un véhicule sur lequel le hayon 10 est monté.

La présence de cette zone de faiblesse mécanique permet, lorsque la doublure structurelle 20 est montée sur un hayon 10 de véhicule automobile, de réaliser une ouverture 28 dans la doublure en découpant une partie, ce qui permet d'accéder au compartiment 60 situé entre la doublure structurelle 20 et la peau externe 30. Ainsi, on peut remplacer des éléments techniques 40 ou tout autre pièce défectueuse se situant dans le corps creux 60, sans avoir à démonter la peau d'aspect 30 de la doublure 20 ou bien à remplacer le hayon 10 en totalité.

Avantageusement, la face intérieure 24 de la doublure structurelle 20 peut comporter un léger liseré en relief qui longe le tracé que suit la rainure 23 sur la face extérieure 22. De cette manière, la position de la rainure 23 est indiquée sur la face intérieure 24, qui est celle visible lors de la découpe, ce qui permet de plus facilement découper le long de cette rainure 23. De la même manière, la face intérieure 24 peut comporter une amorce de rainure en regard de la rainure 23 de la face extérieure 22. Cette amorce permet de débuter la découpe de la rainure 23 en permettant de placer l'outil de découpe directement en regard de la rainure 23 de la face extérieure 22.

Avantageusement, la face extérieure peut comporter une nervure de guidage située à proximité de la rainure 23 et longeant celle-ci. Cette nervure permet d'améliorer le guidage de la découpe le long de la rainure 23.

Selon la doublure de l'invention, la rainure 23 forme un contour délimitant une trappe d'accès 50. Ainsi, lorsque l'on découpe la doublure structurelle 20, on dispose d'une trappe d'accès 50 qui est soit encore solidaire et que l'on peut pivoter pour réaliser l'ouverture 28, soit que l'on peut complètement retirer de la doublure structurelle 20.

La face extérieure 22 de la doublure structurelle 20 comporte des moyens de fixation 26 d'éléments techniques 40 qui sont situés à l'intérieur du contour fermé délimitant la trappe d'accès 50. Ainsi, les éléments techniques 40 sont fixés directement sur la trappe d'accès 50. Cette disposition facilite le remplacement de l'élément technique 40 parce que, si la trappe d'accès 50 est retirée de la doublure 20, on peut effectuer le remplacement dans une position confortable hors du hayon 10. De même, si la trappe 50 reste solidaire de la doublure structurelle 20, on peut quand même effectuer le remplacement hors du corps creux 60 du hayon 10.

De manière alternative, les moyens de fixation 26 d'éléments techniques 40 peuvent être situés sur la face extérieure 22 de la doublure 20, hors du contour fermé délimité la trappe d'accès 50. Dans cette alternative, la trappe d'accès 50 sert uniquement à créer une ouverture 28 afin d'accéder aux éléments techniques 40, qui ne sont pas fixés sur la trappe d'accès 50, afin de procéder à leur remplacement.

La doublure structurelle 20 comporte avantageusement au moins un moyen de retenue 29 qui est proche de la rainure, tout en étant hors du contour fermé délimité par la rainure 23. Ces moyens de retenue 29 permettent et facilitent la fixation de la trappe d'accès 50 dans l'ouverture 28 une fois le remplacement de l'élément technique 40 effectué.

La trappe 50 comporte également avantageusement un moyen de fixation 53 de la trappe d'accès 50. Ce moyen est donc situé dans le contour fermé délimitant la trappe d'accès 50, et sur la face extérieure 22. Ce moyen facilite la fixation de la trappe 50, de la même manière que les moyens de retenue 29 situés hors du contour fermé. De manière avantageuse, ces moyens 29, 53 peuvent coopérer entre eux afin de réaliser la fermeture de la trappe 50.

Nous allons maintenant décrire le procédé de remplacement d'un élément technique 40 fixé sur la doublure structurelle 20 du hayon 10 de véhicule automobile. Ce remplacement est réalisé en quatre étapes principales.

Une première étape consiste à découper la trappe d'accès 50 dans la doublure structurelle 20 du hayon 10. La découpe se fait en suivant le contour suivit par la rainure 23 sur la face intérieure 24, qui guide la découpe. Cette étape de découpe peut être réalisée, à l'aide d'un outil de coupe, comme une lame effilée, une fraiseuse de petit diamètre, une pointe chauffée. Tout autre moyen de découpe pourra être utilisé. Cette découpe peut être réalisée en suivant tout le parcours de la rainure 23, jusqu'à pourvoir retirer complètement la trappe d'accès 50, ou bien laisser une partie de doublure 20 intacte qui laisse la trappe 50 solidaire du reste de la doublure structurelle 20.

Une deuxième étape consiste à dégager l'ouverture 28 dans la doublure structurelle 20, soit par retrait complet de la trappe 50, soit par pivotement de celle-ci.

Une troisième étape consiste à remplacer l'élément technique 40 défectueux par un autre.

La quatrième étape consiste à fermer l'ouverture 28. Cette fermeture peut être réalisée par utilisation d'une trappe de remplacement 52 spécifique, produite séparément, dans l'ouverture 28 de la doublure structurelle 20 ou par fixation de la trappe 50 qui a été découpée dans la doublure structurelle 20.

Ainsi, le procédé selon l'invention permet le remplacement, de manière rapide et qualitative, d'un élément technique 40 qui est placé entre la doublure structurelle 20 et la peau externe 30 d'un hayon de véhicule 10, sans démonter ledit hayon 10.

Nous allons maintenant décrire un premier mode de réalisation de l'invention à l'appui des figures 5 a et 5 b, qui présentent une section de la doublure structurelle 20 selon le plan B-B de la figure 4. Pour celui-ci, nous ne décrirons que les éléments ajoutés à la description générale ci-dessus.

La doublure structurelle 20 selon le premier mode de réalisation de l'invention, présentée en figure 5a comporte une rainure 23 sur une face qui délimite un contour fermé autour d'un élément technique 40 qui est fixé à l'aide de moyens de fixation 26. Ici, les moyens de fixation 26 sont un logement pour l'élément technique 40 réalisé directement par la doublure structurelle 20. Ce logement est apte à accueillir l'élément technique 40.

De manière alternative, l'élément technique 40 peut être situé hors du contour fermé et sur la face extérieure 22. Dans cette alternative, les moyens de fixation 26 sont situés sur la face extérieure 22, mais hors du contour fermé.

La doublure structurelle 20 présente sur sa première face 22 des moyens de retenue 29 disposés hors du contour fermé, à proximité de la rainure 23. Ces moyens sont ici des protubérances aptes à coopérer, avec des clips d'une trappe de remplacement 52.

La rainure 23, comme précédemment, est apte à guider la découpe d'une trappe 50 dans la doublure structurelle 20, afin de dégager une ouverture 28.

Dans ce mode de réalisation, la trappe 50 est destinée à être complètement retirée de la doublure structurelle 20 et jetée, puis est remplacée par une nouvelle trappe, que l'on nommera trappe de remplacement 52.

L'invention concerne également une doublure structurelle 20 comprenant une trappe de remplacement 52. Cette trappe de remplacement 52 d'ouverture 28 de doublure structurelle 20 comporte une face technique 56 qui comporte au moins un moyen de fixation d'élément technique 26. Le moyen de fixation d'élément technique est ici semblable à celui que comportait la doublure structurelle 20 avant sa découpe.

De manière alternative, la trappe de remplacement 52 ne comporte pas de moyen de fixation 26 d'élément technique 40, qui peut être situé sur la face extérieure 22, hors du contour fermé.

Cette face technique 56 de la trappe de remplacement 52 comporte au moins un clip 58, qui est apte à coopérer avec le moyen de retenue 29 bordant ponctuellement l'ouverture 28 la doublure structurelle 20. La trappe de remplacement 52 peut comporter deux clips 58, qui sont situés sur des bords opposés de celle-ci. Avantageusement, elle peut comporter plus de clips 58, c'est-à-dire trois, quatre, cinq ou bien plus encore.

Ainsi, cette trappe de remplacement 52, peut se fixer de manière extrêmement simple et rapide sur l'ouverture 28 de la doublure structurelle 20. La coopération des clips 58 avec les moyens de fermeture 29 permet une fixation robuste de la trappe de remplacement 52.

De plus, la trappe de remplacement 52 a une taille qui est supérieure à celle de l'ouverture 28 de la doublure structurelle 20. La face technique 56 recouvre donc complètement l'ouverture 28, ce qui permet de cacher une découpe qui ne serait pas suffisamment précise, ce qui permet de conférer à l'assemblage de la doublure structurelle 20 et de la trappe de remplacement 52 un aspect esthétique satisfaisant.

L'invention a également pour objet une doublure structurelle 20 assemblée avec la trappe de remplacement décrite ci-dessus. Cet assemblage est illustré par la figure 5b.

Nous allons maintenant décrire le procédé de remplacement de l'élément technique suivant le premier mode de réalisation de l'invention. Ce procédé est le même que celui décrit précédemment, dans lequel l'étape de découpe est réalisée tout le long du contour fermé parcouru par la rainure 23. Ainsi, on retire complètement la trappe 50 de la doublure structurelle 20.

Ensuite, les étapes de remplacement de l'élément technique 40 et de fermeture de l'ouverture 28 se font par clippage de la trappe de remplacement 52, qui est une trappe qui n'est pas issue de la découpe de la doublure structurelle 20, dans l'ouverture 28 de la doublure 20.

Ce procédé est particulièrement avantageux car il permet de remplacer un élément technique 40 défectueux par un nouveau très rapidement, par l'ajout d'une trappe de remplacement 52 sur laquelle est déjà fixé un nouvel élément technique 40. De plus, vu que l'ouverture 28 est complètement recouverte par la trappe de remplacement 52, donc cachée, la découpe de celle-ci ne nécessite pas une très grande précision.

De manière alternative, lorsque la trappe d'accès 50 ne comporte pas d'élément technique 40 (qui est fixé sur la face extérieure 22, hors de la trappe d'accès 50), l'étape de remplacement de celui-ci se fait après retrait de la trappe d'accès 50, et avant remplacement de celle-ci par la trappe de remplacement 52.

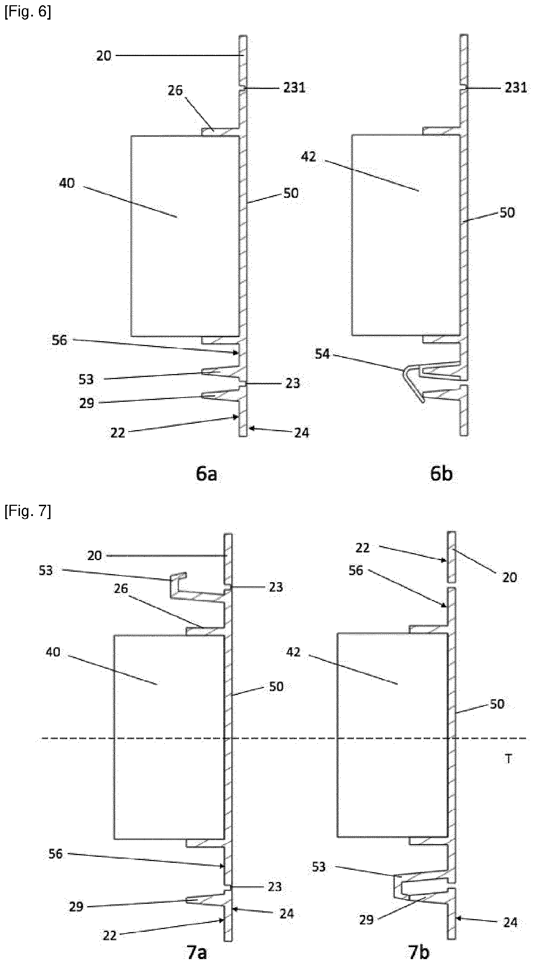

Nous allons maintenant décrire un second mode de réalisation de l'invention à l'appui des figures 6a et 6b, qui représentent une section de la doublure structurelle 20 selon le plan B-B de la figure 4, avant et après remplacement de l'élément technique.

La doublure structurelle 20 selon ce mode réalisation est semblable à celle présentée au début de la description détaillée, à l'exception des éléments décrits ci-dessous.

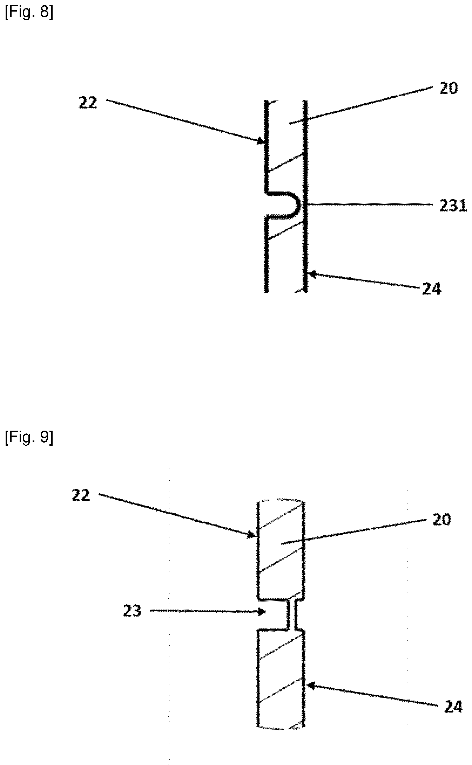

Dans cette doublure structurelle 20, une partie de la rainure 23 constitue un film charnière 231. Ce film charnière 231 permet, lorsque le reste de la rainure a été découpée, sauf à l'endroit de la charnière (par exemple en découpant trois côtés sur quatre du parcours de la rainure 23, le quatrième côté de la rainure 23 étant d'épaisseur réduite et formant le film charnière 231), de faire pivoter la trappe autour de celui-ci, par flexibilité du film charnière 231, suivant un axe de rotation défini par le film 231. La figure 9 représente une vue en coupe de la rainure 23 et le film charnière 231 est représenté en coupe en figure 8.

Dans cet exemple, la rainure 23 délimite un contour en forme de rectangle autour de l'élément technique 40, dont le film charnière 231 forme en partie ou complètement un des côtés.

Le moyen de fixation 53 de la trappe 50 est situé en regard du moyen de fermeture situé hors du contour fermé 29. Ainsi, il est dans une position adaptée à maintenir la trappe en position fermée, une fois la découpe et le remplacement de l'élément technique 40 réalisées.

Le moyen de fixation 53 de la trappe 50 est apte à recevoir une agrafe 54. Cette agrafe est fixée au moyen de fermeture 53, par exemple par exemple par serrage, clipsage ou sertissage, une fois l'élément technique de remplacement 42installé, après la découpe de la trappe 50. Cette agrafe 54 est apte à coopérer avec le moyen de retenue 29 situé hors du contour délimité par la rainure 23. Ainsi, lorsque l'on referme la trappe 50, l'agrafe 54 fixe celle-ci en position fermée dans l'ouverture 28 de la doublure structurelle 20. Ainsi, l'ajout d'une agrafe sur des moyens de de retenue 29, 53 constitue une solution technique simple, fiable et peu onéreuse pour maintenir la trappe 50 en position fermée une fois l'élément technique 40 remplacé.

Nous allons maintenant décrire le procédé de remplacement de l'élément technique 40 suivant le deuxième mode de réalisation de l'invention. Le procédé selon ce mode réalisation est semblable à celui présenté au début de la description détaillée, à l'exception des éléments décrits ci-dessous.

L'étape de découpe de la trappe d'accès 50 laisse intacte la partie de la rainure 23 formant le film charnière 231 de la doublure structurelle 20. Ainsi, la trappe 50 est libre de pivoter autour du film 231.

Ainsi, l'étape de dégagement de la trappe 50 consiste non pas à retirer la trappe 50 de la doublure structurelle 20, mais à la faire pivoter autour du film charnière 231, grâce à la flexibilité de celui-ci.

Ensuite, vu que l'on ne retire pas la trappe 50, on remplace donc l'élément technique 40 par un élément technique de remplacement 42 directement sur la trappe 50, qui est encore solidaire de la doublure structurelle 20. De manière alternative, lorsque l'élément technique 40 est fixé sur la face extérieure 22 et non sur la trappe d'accès 50, la découpe et le pivotement de la trappe d'accès 50 permet l'accès à l'élément technique 40 et son remplacement sur la face extérieure 22.

Enfin, l'étape de fermeture de l'ouverture 28 est réalisée en rabattant la trappe d'accès 50 dans l'ouverture 28. Ainsi, lorsque la trappe d'accès 50 referme l'ouverture 28, les moyens de retenue 29 situés hors du contour fermé, et les moyens de fixation 53 de la trappe d'accès 50 coopèrent afin de maintenir la trappe d'accès 50 fermée.

Plus particulièrement, lorsqu'une agrafe 54 a été installée sur le moyen de fixation 53 de la trappe 50, juste avant ou après l'étape de remplacement de l'élément technique 40 sur la trappe 50, celle-ci s'appuie sur le moyen de fermeture hors du contour fermé 29 une fois l'étape de fermeture de la trappe effectuée, ce qui maintient efficacement la trappe 50 en position fermée.

Le procédé de remplacement de l'élément technique 40 est particulièrement avantageux car il représente un moyen simple de remplacer l'élément technique, sans avoir besoin de rapporter une nouvelle trappe de remplacement.

Nous allons maintenant décrire un troisième mode de réalisation de l'invention, à l'appui des figures 7a et 7b, qui représentent une section de la doublure structurelle 20 selon le plan B-B de la figure 4, avant et après remplacement de l'élément technique.

La doublure structurelle 20 selon le troisième mode de réalisation de l'invention comporte des moyens de fixation 53 de la trappe d'accès 50 qui sont situés en regard des moyens de retenue 29 de la doublure 20 situés hors du contour fermé lorsque la trappe d'accès 50 effectue une rotation de 180 degrés autour d'un axe de rotation T normal à la face extérieure 22 de la doublure 20. L'angle de rotation effectuée peut prendre plusieurs valeurs selon la forme de la trappe d'accès 50. Dans le cas illustré ici, avec une trappe d'accès 50 de forme rectangulaire, cette rotation est de 180 degrés. On pourrait très bien avoir une rotation de 90 degrés dans le cas d'une trappe d'accès 50 de forme carrée. Un angle de rotation de 120 degrés est également envisageable dans le cas d'une trappe d'accès 50 de forme triangulaire. On pourrait également avoir n'importe quel angle de rotation dans le cas d'une trappe d'accès 50 en forme de disque.

Ainsi, dans la position initiale de la trappe d'accès 50, c'est-à-dire avant la découpe de celle-ci, les moyens de retenue 29 et les moyens de fixation 53 ne sont pas en regard. Ils ne peuvent donc pas coopérer pour empêcher le retrait de la trappe 50. Avant de replacer la trappe 50 dans l'ouverture 28, on lui fait effectuer la rotation précédemment décrite, ce qui a pour effet de mettre les moyens de fixation de la trappe d'accès 50 en regard des moyens de retenue 29 situés hors du contour fermé. Ainsi, dans cette position, la trappe d'accès 50 est fixée à l'ouverture 28 de la doublure structurelle 20.

Nous allons maintenant décrire le procédé de remplacement de l'élément technique 40 suivant le troisième mode de réalisation de l'invention. Le procédé selon ce mode réalisation est semblable à celui présenté au début de la description détaillée, à l'exception des éléments décrits ci-dessous.

L'étape de dégagement de la trappe est réalisée par retrait complet et désolidarisation de la trappe 50 de la doublure structurelle 20.

L'étape de remplacement de l'élément technique se fait directement sur la trappe 50. On réutilise donc la trappe 50 précédemment retirée pour boucher l'ouverture 28 réalisée dans la doublure structurelle 20 par la découpe.

Comme pour les autres modes de réalisation, l'élément technique 40 n'est pas forcement situé sur la trappe d'accès 50, et peut être situé sur la face extérieure 22 hors de la trappe 50. Dans ce cas, le retrait de la trappe 50 permet l'accès à l'élément technique et son remplacement.

Enfin, l'étape de fermeture est réalisée en replaçant la trappe 50 découpée dans l'ouverture de la doublure structurelle 20. Néanmoins, on fait effectuer à la trappe 50 une rotation de 180 degrés autour de l'axe T normal à la première surface 22 de la doublure structurelle 20, de manière préalable au replacement de la trappe 50 dans l'ouverture 28.

Ce procédé est particulièrement avantageux car il permet de remplacer l'élément technique 40 sans avoir à utiliser de trappe de remplacement 52 en plus. De plus, il n'a pas besoin d'ajouter de moyens de maintien en plus sur la trappe d'accès 50 avant de la replacer dans l'ouverture 50. Ce procédé représente donc un moyen rapide et peu coûteux de remplacer un élément technique défectueux placé entre la doublure structurelle 20 et la peau externe 30 d'un hayon 10.

### Nomenclature :

- 10 :: hayon arrière de véhicule automobile
- 20 :: doublure structurelle du hayon
- 22 :: face extérieure de la doublure structurelle
- 23 :: rainure
- 231 :: film charnière
- 24 :: face intérieure de la doublure structurelle
- 26 :: moyen de fixation d'élément techniques
- 28 :: ouverture dans la doublure structurelle
- 29 :: moyen de retenue
- 30 :: peau d'aspect du hayon
- 40 :: élément technique
- 42 :: élément technique de remplacement
- 50 :: trappe d'accès
- 52 :: trappe de remplacement
- 53 :: moyen de fixation de la trappe
- 54 :: agrafe
- 56 :: face technique de la trappe d'accès ou de la trappe de remplacement
- 58 :: clip
- 60 :: corps creux

## Revendications

1. Doublure structurelle (20) en matière plastique pour hayon (10) de véhicule automobile, **caractérisée en ce qu'**elle comporte une face extérieure (22) tournée vers l'extérieur du véhicule et une face intérieure (24) tournée vers l'intérieur du véhicule lorsque le hayon (10) est assemblé sur celui-ci, et au moins une rainure (23) portée par une des deux faces (22, 24), la rainure (23) formant une zone de faiblesse mécanique apte à faciliter la réalisation d'une ouverture (28) au sein de la doublure structurelle (20), la rainure (23) formant un contour délimitant une trappe d'accès (50).

2. Doublure structurelle (20) selon la revendication précédente dans laquelle la face extérieure (22) comporte des moyens de fixation (26) d'éléments techniques (40) situés à l'intérieur du contour fermé délimitant la trappe d'accès (50).

3. Doublure structurelle (20) selon l'une des revendications précédentes dans laquelle la face extérieure (22) comporte au moins un moyen de retenue (29) disposé à proximité de la rainure (23) hors du contour fermé.

4. Doublure structurelle (20) selon la revendication 3 dans laquelle la trappe d'accès (50) comporte au moins un moyen de fixation (53).

5. Doublure structurelle (20) selon la revendication précédente dans laquelle le moyen de fixation (53) de la trappe d'accès (50) est situé en regard du ou des moyens de retenue (29) disposés à proximité de la rainure (23) hors du contour fermé.

6. Doublure structurelle (20) selon la revendication précédente dans laquelle une partie de la rainure (23) constitue un film charnière (231) permettant la rotation de la trappe (50) lorsque l'ouverture (28) de la doublure structurelle (20) a été réalisée.

7. Doublure structurelle (20) selon la revendication précédente dans laquelle le moyen de fixation (53) de la trappe d'accès (50) est apte à recevoir une agrafe (54) apte à coopérer avec le moyen de retenue (29) disposé à proximité de la rainure (23) hors du contour fermé.

8. Doublure structurelle (20) selon la revendication 4 dans laquelle le moyen de fixation (53) de la trappe d'accès (50) est en regard des moyens de retenue (29) disposés à proximité de la rainure (23) hors du contour fermé lorsque la trappe d'accès (50) effectue une rotation autour d'un axe (T) normal à la face extérieure (22).

9. Doublure structurelle (20) selon l'une quelconque des revendications 3 à 8 comprenant une trappe de remplacement (52) de l'ouverture (28) de la doublure structurelle (20) **caractérisée en ce que** la trappe de remplacement (52) comporte au moins un clip (58) apte à coopérer avec le moyen de retenue (29) disposé à proximité de l'ouverture (28) de la doublure structurelle (20).

10. Doublure structurelle (20) selon la revendication précédente, dans laquelle la trappe de remplacement (52) comporte une face technique (56) destinée à être cachée lorsque la trappe de remplacement (52) est montée sur l'ouverture (28) de la doublure structurelle (20), la face technique (56) comportant au moins un moyen de fixation d'élément technique (26).

11. Doublure structurelle (20) selon la revendication précédente, dans laquelle la trappe de remplacement (52) a une taille supérieure à celle de l'ouverture (28) de la doublure structurelle (20) à laquelle la trappe de remplacement (52) est destinée.

12. Doublure structurelle (20) selon l'une des revendications 9 à 11, dans laquelle la trappe de remplacement (52) est fixée à la doublure structurelle (20) par serrage de bords de l'ouverture (28) de la doublure structurelle (20) entre la face technique (56) de la trappe de remplacement (52) et le clip (58) de la trappe de remplacement (52).

13. Hayon plastique (10) de véhicule automobile comportant une doublure structurelle (20) selon l'une des revendications 1 à 12.

14. Procédé de remplacement d'un élément technique (40) fixé sur une doublure structurelle (20) d'un hayon (10) de véhicule automobile **caractérisé en ce qu'**il comporte les étapes de :
- découpe d'une trappe d'accès (50) dans la doublure structurelle (20) du hayon (10) en suivant une rainure (23) de la doublure structurelle (20) ;
- dégagement d'une ouverture (28) dans la doublure structurelle (20) laissée par la découpe de la trappe d'accès (50) ;
- remplacement de l'élément technique (40) par un élément technique de remplacement (42) ; et
- fermeture de l'ouverture (28).

15. Procédé de remplacement selon la revendication précédente dans lequel on ferme l'ouverture (28) par clippage d'une trappe de remplacement (52).

16. Procédé de remplacement selon la revendication 14 dans lequel :
- l'étape de découpe de la trappe d'accès (50) laisse intacte une partie de la rainure (23) formant un film charnière (231) de la doublure structurelle (20) ;
- l'étape de dégagement de la trappe d'accès (50) est réalisée par rotation de la trappe (50) autour du film charnière (231) ;
- l'étape de fermeture est réalisée en rabattant la trappe d'accès (50) dans l'ouverture (28).

17. Procédé de remplacement selon la revendication 14 dans lequel :
- l'étape de dégagement de la trappe d'accès (50) est réalisée par retrait complet de celle-ci ;
- l'étape de fermeture est réalisée en replaçant la trappe d'accès (50) dans l'ouverture (28), en lui ayant fait effectuer une rotation autour d'un axe (T) de celle-ci, de préférence une rotation de 180 degrés autour de l'axe (T).

## Patentansprüche

1. Strukturelle Auskleidung (20) aus Kunststoff für die Heckklappe (10) eines Kraftfahrzeugs, **dadurch gekennzeichnet, dass** es eine Außenseite (22), die der Außenseite des Fahrzeugs zugewandt ist, und eine Innenseite (24), die der Innenseite des Fahrzeugs zugewandt ist, wenn die Heckklappe (10) an diesem montiert ist, aufweist, und mindestens eine Nut (23), die von einer der beiden Seiten (22, 24) getragen wird, wobei die Nut (23) eine Zone mechanischer Schwäche bildet, die geeignet ist, die Herstellung einer Öffnung (28) im Inneren der strukturellen Auskleidung (20) zu erleichtern, wobei die Nut (23) eine Kontur bildet, die eine Zugangsklappe (50) begrenzt.

2. Strukturelle Auskleidung (20) nach dem vorhergehenden Anspruch, bei dem die Außenseite (22) Mittel (26) zur Befestigung von technischen Elementen (40) aufweist, die sich innerhalb der geschlossenen Kontur befinden, die die Zugangsklappe (50) begrenzt.

3. Strukturelle Auskleidung (20) nach einem der vorhergehenden Ansprüche, bei dem die Außenseite (22) mindestens ein Haltemittel (29) aufweist, das in der Nähe der Nut (23) außerhalb der geschlossenen Kontur angeordnet ist.

4. Strukturelle Auskleidung (20) nach Anspruch 3, bei der die Zugangsklappe (50) mindestens ein Befestigungsmittel (53) aufweist.

5. Strukturelle Auskleidung (20) nach dem vorhergehenden Anspruch, bei dem das Befestigungsmittel (53) der Zugangsklappe (50) gegenüber dem oder den Haltemitteln (29) liegt, die in der Nähe der Nut (23) außerhalb der geschlossenen Kontur angeordnet sind.

6. Strukturelle Auskleidung (20) nach dem vorhergehenden Anspruch, bei dem ein Teil der Nut (23) einen Filmscharnier (231) bildet, das die Drehung der Klappe (50) ermöglicht, wenn die Öffnung (28) der strukturellen Auskleidung (20) hergestellt worden ist.

7. Strukturelle Auskleidung (20) nach dem vorhergehenden Anspruch, bei dem das Befestigungsmittel (53) der Zugangsklappe (50) eingerichtet ist, eine Klammer (54) aufzunehmen, die eingerichtet ist, mit dem Haltemittel (29) zusammenzuwirken, das in der Nähe der Nut (23) außerhalb der geschlossenen Kontur angeordnet ist.

8. Strukturelle Auskleidung (20) nach Anspruch 4, bei dem das Befestigungsmittel (53) der Zugangsklappe (50) den Haltemitteln (29) gegenüberliegt, die in der Nähe der Nut (23) außerhalb der geschlossenen Kontur angeordnet sind, wenn die Zugangsklappe (50) eine Drehung um eine Achse (T) ausführt, die normal zur Außenseite (22) verläuft.

9. Strukturelle Auskleidung (20) nach einem der Ansprüche 3 bis 8 mit einer Austauschklappe (52) für die Öffnung (28) der strukturellen Auskleidung (20), **dadurch gekennzeichnet, dass** die Austauschklappe (52) mindestens einen Clip (58) aufweist, der eingerichtet ist, mit dem in der Nähe der Öffnung (28) der strukturellen Auskleidung (20) angeordneten Haltemittel (29) zusammenzuwirken.

10. Strukturelle Auskleidung (20) nach dem vorhergehenden Anspruch, wobei die Austauschklappe (52) eine technische Seite (56) aufweist, die verborgen werden soll, wenn die Austauschklappe (52) an der Öffnung (28) der strukturellen Auskleidung (20) angebracht ist, wobei die technische Seite (56) mindestens ein Mittel zur Befestigung eines technischen Elements (26) aufweist.

11. Strukturelle Auskleidung (20) nach dem vorhergehenden Anspruch, wobei die Austauschklappe (52) eine größere Größe hat als die Öffnung (28) der strukturellen Auskleidung (20), für die die Austauschklappe (52) bestimmt ist.

12. Strukturelle Auskleidung (20) nach einem der Ansprüche 9 bis 11, wobei die Austauschklappe (52) an der strukturellen Auskleidung (20) befestigt ist, indem die Ränder der Öffnung (28) der strukturellen Auskleidung (20) zwischen der technischen Seite (56) der Austauschklappe (52) und dem Clip (58) der Austauschklappe (52) eingeklemmt werden.

13. Kunststoff-Heckklappe (10) eines Kraftfahrzeugs mit einer strukturellen Auskleidung (20) nach einem der Ansprüche 1 bis 12.

14. Verfahren zum Ersetzen eines technischen Elements (40), das an einer Strukturelle Auskleidung (20) einer Heckklappe (10) eines Kraftfahrzeugs befestigt ist, **dadurch gekennzeichnet, dass** es die folgenden Schritte umfasst::
- Ausschneiden einer Zugangsklappe (50) in die strukturelle Auskleidung (20) der Heckklappe (10) entlang einer Nut (23) in der strukturellen Auskleidung (20);
- Freilegen einer Öffnung (28) in der strukturellen Auskleidung (20), die durch das Ausschneiden der Zugangsklappe (50) zurückbleibt;
- Ersetzen des technischen Elements (40) durch ein technisches Austauschelement (42); und
- Schließen der Öffnung (28).

15. Austauschverfahren nach dem vorhergehenden Anspruch, bei dem die Öffnung (28) durch Einclipsen einer Austauschklappe (52) geschlossen wird.

16. Austauschverfahren nach Anspruch 14, wobei:
- der Schritt des Ausschneidens der Zugangsklappe (50) einen Teil der Nut (23), die ein Filmscharnier (231) der strukturellen Auskleidung (20) bildet, intakt lässt;
- der Schritt des Freigebens der Zugangsklappe (50) durch Drehen der Klappe (50) um das Filmscharnier (231) durchgeführt wird;
- der Schritt des Schließens wird durchgeführt, indem die Zugangsklappe (50) in die Öffnung (28) geklappt wird.

17. Austauschverfahren nach Anspruch 14, wobei:
- der Schritt des Freigebens der Zugangsklappe (50) durch vollständiges Entfernen derselben durchgeführt wird;
- der Schritt des Schließens durchgeführt wird, indem die Zugangsklappe (50) wieder in die Öffnung (28) eingesetzt wird, nachdem sie um eine Achse (T) derselben gedreht wurde, vorzugsweise um 180 Grad um die Achse (T).

## Claims

1. Structural liner (20) made of plastic for hatchback (10) of a motor vehicle, **characterized in that** it comprises an outer face (22) oriented towards the outside of the vehicle and an inner face (24)oriented towards the inside of the vehicle when the hatchback (10) is assembled thereon, and at least one groove (23) borne by one of the two faces (22, 24), the groove (23) forming a zone of mechanical weakness able to facilitate the execution an opening (28) within the structural liner (20), the groove (23) forming a contour delineating an access hatch (50).

2. Structural liner (20) according to the preceding claim wherein the outer face (22) comprises fastening means (26) of technical elements (40) located inside the closed contour defining the access hatch (50).

3. Structural liner (20) according to one of the preceding claims wherein the outer face (22) comprises at least one retaining means (29) arranged near the groove (23) outside of the closed contour.

4. Structural liner (20) according to claim 3 wherein the access hatch (50) comprises at least one fastening means (53).

5. Structural liner (20) according to the preceding claim wherein the fastening means (53) of the access hatch (50) is located facing the retaining means (29) arranged near the groove (23) outside closed contour.

6. Structural liner (20) according to the preceding claim wherein a portion of the groove (23) constitutes a film hinge (231) allowing rotation of the hatch (50) when the opening (28) of the structural liner (20) has been made.

7. Structural liner (20) according to the preceding claim wherein the fastening means (53) of the access hatch (50) is able to receive a clasp (54) suitable to cooperate with the retaining means (29) arranged near the groove (23) outside of the closed contour.

8. Structural liner (20) according to claim 5 wherein the fastening means (53) of the access hatch (50) is facing the retaining means (29) arranged near the groove (23) outside the closed contour when the access hatch (50) rotates about an axis (T) normal to the outer face (22).

9. Structural liner (20) according to one of claims 3 to 8 comprising a replacement hatch (52) for the opening (28) of the structural liner (20), **characterized in that** the replacement hatch (52) comprises at least one clip (58) suitable to cooperate with the retaining means (29) arranged near the opening (28) of the structural liner (20).

10. Structural liner (20) according to the preceding claim, wherein the replacement hatch (52) comprises a technical face (56) intended to be hidden when the replacement hatch (52) is mounted on the opening (28) of the structural liner (20), the technical side (56) having at least one technical element fastening means (26).

11. Structural liner (20) according to the preceding claim which has a size that is larger than that of the opening (28) of the structural liner (20) for which the replacement hatch (52) is intended.

12. Structural liner (20) with a replacement hatch (52) according to one of claims 9 to 11, wherein the replacement hatch (52) is secured to the structural liner (20) by clamping edges of the opening (28) of the structural liner (20) between the technical face (56) of the replacement hatch (52) and the clip (58) of the replacement hatch (52).

13. Plastic hatchback (10) of a motor vehicle comprising a structural liner (20) according to one of the claims 1 to 8 or 12.

14. A method of replacing a technical element (40) fastened to a structural liner (20) of a motor vehicle hatchback (10) **characterized in that** it comprises the steps of:
- cut-out of an access hatch (50) in the structural liner (20) of the hatchback (10) following a groove (23) of the structural liner (20);
- clearing of an opening (28) in the structural liner (20) left by the cut-out of the access hatch (50);
- replacing the technical element (40) with a replacement technical element (42); and
- closing the opening (28).

15. Replacement method according to the preceding claim wherein the opening (28) is closed by clipping on a replacement hatch (52).

16. The replacement method of claim 14 wherein:
- the step of cutting out the access hatch (50) leaves a portion of the groove (23) intact, forming a film hinge (231) of the structural liner (20);
- the step of clearing the access hatch (50) is executed by rotation of the door (50) around the film hinge (231);
- the closing step is performed by folding down the access hatch (50) into the opening (28).

17. The replacement method of claim 14 wherein:
- the step of clearing the access hatch (50) is executed by completely removing it;
- the closing step is carried out by replacing the access hatch (50) into the opening (28), by rotating around an axis (T) thereof, preferably a rotation of 180 degrees around the axis (T).
